# EUROPEAN PATENT SPECIFICATION

(11) **EP 1 763 389 B1**
(45) Date of publication and mention of the grant of the patent: **19.05.2010**
(21) Application number: 05702154.5
(22) Date of filing: 28.01.2005
(51) Int. Cl.: B01D 33/00

(54) **APPARATUS AND METHOD FOR MAKING A SCREEN UNIT FOR A SCREEN ASSEMBLY**
VORRICHTUNG UND VERFAHREN ZUR HERSTELLUNG EINER SIEBEINHEIT FÜR EINE SIEBANORDNUNG
APPAREIL ET PROCEDE POUR FABRIQUER UN TAMIS POUR UN ENSEMBLE DE TAMISAGE

(30) Priority: 28.01.2004 US 766683
(43) Date of publication of application: 21.03.2007
(73) Proprietor: Varco I/P, Inc., Houston TX 77042-4200 (US)
(72) Inventor: ADAMS, Thomas, Cole, Hockley, Texas 77447 (US); WARD, Kerry, Thomas, Cypress, Texas 77429 (US); SEYFFERT, Kenneth, Wayne, Houston, Texas 77018 (US); LARGENT, David, Wayne, Cleveland, Texas 77327 (US); SCHULTE, JR., David, Lee, Willis, Texas 77378 (US); GRICHAR, Charles, Newton, Houston, Texas 77009 (US); MCCLUNG III, Guy, Lamont, Spring, Texas 77379 (US)
(74) Representative: Lucas, Phillip Brian
(86) International application number: PCT/GB2005/050009
(87) International publication number: WO 2005/072846

(56) References cited:
- WO-A-03/033102
- WO-A-03/095113
- US-A- 5 032 210

## Description

The present invention relates to an apparatus and method for making a screen unit for a screen assembly.

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328.

Shale shakers generally comprise an open bottomed basket having one open discharge end and a solid walled feed end. A number of rectangular screen assemblies are arranged in the basket, which are held in C-channel rails located on the basket walls, such as those disclosed in GB-A-2,176,424. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screen assemblies fixed thereto to shake. Solids laden mud is introduced at the feed end of the basket on to the screen assemblies. The shaking motion induces the solids to move along the screen assemblies towards the open discharge end. Drilling mud passes through the screen assemblies. The recovered drilling mud is received in the receptor for further processing and the solids pass over the discharge end of the basket into the ditch or skip

The screen assemblies are generally of one of two types: hook-strip; and pre-tensioned.

The hook-strip type of screen assembly comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. A variant of this type of screen assembly comprises a supporting mesh and/or a thin sheet panel having apertures therein.

The pre-tensioned type of screen assembly comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen assembly is then inserted into C-channel rails arranged in a basket of a shale shaker. An example of this type of screen is disclosed in GB-A-1,578,948.

A further example of a known rigid support is a rectangle of box section steel.

A further example of a known rigid support is disclosed in PCT Publication No. WO 01/76719, which discloses, amongst other things, a flat panel like portion having apertures therein and wing portions which are folded to form a support structure, which may be made from a single sheet of material. This rigid support has been assigned the Trade Mark "UNIBODY" by the applicants.

WO 2004/035234 and WO 2004/035236 disclose a third type of screen assembly, which comprises one or more layers of mesh on a semi-rigid support. The semi rigid support is not sufficiently rigid on its own for use in a standard vibratory separator, such as a VSM 100™ or VSM 300™ or Cobra™ shale shakers sold by the Brandt, a Varco Company, but requires additional support using one or two intermediate supports over which the semi-rigid support can be deflected to provide additional support, which do not impinge on screening area or affect the flow of material over the screening surface of the screen assembly. The intermediate support can be arranged in a removable rigid tray or fixed to the shale shaker. The semi-rigid support is lighter than a rigid support for a standard pre-tensioned screen assembly, such as those disclosed in WO 01/76719 and thus can be handled more easily and transportation costs reduced.

The layers of mesh in the screen assemblies wears out frequently and therefore needs to be easily replaceable. Shale shakers are generally in the order of 1.5m (5ft) wide and 3m (10ft) long. A screen of dimensions 4ft wide by 3m (10ft) long is difficult to handle, replace and transport. It is known to use two, three, four or more screens in a single shale shaker. A standard size of screen currently used is of the order of 1.2m (4ft) by 1m (3ft).

Screening material can also be used on shale shakers in the form of a roll of screening material, as disclosed in WO 2004/062817. The screening material is fed from the roll into the shale shaker to be used in screening solids laden drilling mud and used worn screening material is taken up on a take-up roll.

A method for facilitating manufacture of a screen is disclosed in WO 03/033102, which method comprises the steps of applying glue in a glue pattern to at least one layer of screening material useful for screening fluid introduced to a vibratory separator, said applying done by powered moving mechanical glue application means. The glue is preferably heated moisture-curing hot melt glue, the method further comprising heating the glue. The method advantageously further comprises the step of spraying the screen to speed up the curing of the glue. Also disclosed in the use of a laminating station having two rollers forming a nip through which layers of mesh are laminated and a support over which the laminated screen passes and a shear apparatus for cutting the laminated screen as desired.

US-A-5,032,210 discloses an apparatus for making a circular screen assembly, the apparatus comprising blocks to hold screening material in tension, a device for applying and bonding a metal disk in the centre of the screen and a table on a ram to hold a frame, which table is moved upwardly on the ram to apply the frame to the screen, which are bonded together.

WO 03/095113 discloses a method of manufacturing a screen comprising a tensioning and clamping jig.

In accordance with the present invention, there is provided A method for making a screen unit for a screen assembly, the method comprising the steps of applying glue to at least one layer of the mesh and applying at least one further layer of mesh by passing the at least one layer and one further layer of screening material through a nip of a pair of rotating rollers to form a laminated screen, characterised by said laminated screen moving on to a table of a finishing station and holding said laminated screen while being cut into a discrete screen unit with a cutting device, the screen continuously fed from the nip of the pair of rotating rollers and continuously cut.

Advantageously, the table has openings therein through which air can flow, the method further comprising the step of cooling the screen passing thereover using air flowing through the openings. Preferably, a tray leads from the laminating station to the table the method further comprising the step of moving the screen thereover. Advantageously, the tray has openings therein through which air can flow, the method further comprising the step of cooling the screen moving thereover using air flowing through the openings. Preferably, the tray is angled downwardly away from the laminating station and to the bed, the method comprising the step of moving the screen along the downwardly angled tray to the bed. Advantageously, a piece of material is placed on the table to inhibit the screen from sticking to the bed. Preferably, wherein the pair of rollers comprises an topr roller and a bottom roller, the method further comprises the step of cooling the bottom roller.

Preferably, one of the pair of rollers is provided with a clutch, the method comprising the step of using the clutch to maintain equal speeds of rotation of the rollers. The rollers are rotated in opposite directions to obtain movement of the screen through the nip. Advantageously, one of the pair if rollers is driven by a first motor and the other roller is driven by a second motor, the method comprising the step of controlling the relative speeds of the rollers to produce a relatively flat planar screen. Preferably, the speed of rotation of the pair of rollers is controlled using an electronic controller. Preferably, a programmed digital controller having data fed thereto by sensors sensing the speed of rotation of each of the rollers in the pair of rollers is used. Preferably, at least one of the dual opposed driven rollers is substantially covered with material for inhibiting glue from sticking to said roller,

Advantageously, the cutting device comprises a cutter arranged on a bar which lies substantially transverse to the direction of the screen, the cutter slideable along the bar the method further comprising the step of drawing the cutter along the bar to cut the screen into discrete screen units. The cutter is preferably slidable by a motor, electronically controlled via the controller. Preferably, the method further comprises the step of activating the cutting device in response to the measured length reaching a predetermined value.

Preferably, a glue is applied to at least one layer of mesh prior to laminating, advantageously, using a powered moving glue nozzle preferably a plurality of nozzles arranged on a movable manifold. The layer of mesh on which the glue is applied, is preferably a supporting mesh for supporting at least one, preferably two layers of fine screen mesh. The layer of mesh preferably moves continuously under the glue nozzle(s). Advantageously, the glue is heated moisture-curing hot melt glue. Preferably, the glue is applied in a pattern comprises a plurality of intersecting lines of glue extending across the at least one layer of screening material.

Preferably, the screen unit is then attached to a screen support to form a screen assembly. The screen can be attached by gluing, preferably using an epoxy adhesive. Preferably, the screen support comprises a perforate plate, preferably metal. Alternatively the support comprises a rigid tubular or UNIBODY™ support or a frame or strip support. Alternatively, the screen unit may be provided with hookstrips to form a screen assembly.

Preferably, the at least two layers of mesh are sewn together, additionally or instead of gluing. Preferably, the sewn-together at least two layers of screening material are placed in a heating apparatus, placing a coarse mesh layer on the at least two layers of screening material on the heating apparatus, placing on the coarse mesh layer a support with heat activated material thereon for adhering the support to the coarse mesh layer, and heating the coarse mesh layer, the at least two layers of fine screening material, and the support to adhere the support to the coarse mesh layer and the at least two layers of screening material to the coarse mesh layer. Preferably, moving said screen unit onto a support, and cutting said screen unit on said support. Advantageously, the glue is heated glue and said support has air flow holes therethrough to facilitate cooling of said glue.

The present invention also provides an apparatus for use in carrying out the method in accordance with any preceding claim, the apparatus comprising a laminating station having a glue application station and at least two rotating rollers forming a nip through which layers of mesh are laminated to form a laminated screen and a finishing station comprising a table and a cutting device for cutting said laminated screen **characterised in that** said finishing station further comprises a clamping apparatus for holding the laminated screen whilst the cutting device cuts said laminated screen into discrete screen units. The clamping apparatus holds the laminated screen firm and stable for an accurate, clean cut. A continuous feed of screen mesh is provided from rolls and the resultant feed from the laminating station is substantially continuous.

Preferably, the table comprises openings through which air can flow to facilitate cooling of the screen. Advantageously, the apparatus further comprises a tray leading from the laminating station to the bed. Preferably, the tray comprises openings through which air can flow to facilitate cooling of the screen. Advantageously, the tray is angled downwardly away from the laminating station and to the bed, preferably, at a shallow angle of between 1 and 7 degrees. Advantageously, the table has legs.

Preferably, the at least two rollers comprise an upper roller and a lower roller arranged to form a nip through which the layer of mesh pass. Advantageously, the upper roller and lower roller is provided with a clutch. Advantageously, upper roller is driven by a first motor and lower roller is driven by a second motor. Independent control and precise control of the speeds of the upper and lower rollers produces a flat screen combination, which can then pass in a flat, planar way along the surface of the tray, under the cuttings apparatus and on to the bed of the table. This allows the cut screen units to be stacked and for the screen to pass under the cuttings apparatus. Independent control is preferably provided by independent motors and advantageously with a clutch. Preferably, the speed of rotation of the upper and lower rollers is controlled using a controller, most preferably a PID controller and may preferably be a digital controller. A sensor is arranged on preferably the lower roller but may be the upper roller and preferably both to measure the speed of rotation of the respective roller. Preferably, the apparatus comprises a belt arranged between the lower roller and the second motor. Advantageously, the cutting device comprises a cutter arranged on a bar, which, in use, lies substantially transverse to the direction of the screen, the cutter slideable along the bar such that in use, the cutter is drawn along the bar to cut the screen into discrete screen units.

Preferably, the apparatus comprises a controller and sensors for measuring the screen length on the table and activating the cutting device in response thereto.

The screening material fed through such apparatus may be any desired dimensions, including, but not limited to, dimensions corresponding to the typical lengths or widths typically used to make known screens for shale shakers. PUR hot melt glue, e.g., but not limited to, commercially available Henkel R 183 B Glue from the Henkel Co. or similar glues may be used. In certain aspects the glue used for applying a glue pattern is such that it rests on top of the screening material even in an uncured or un-set state and does not fall through or out from the screening material and rests on it for further steps in the method, or is such that if it does tend to move downwardly through layer(s) of screening material its rate of movement is such that (and it is sufficiently viscous and/or it is sufficiently cured) it does not fall out from the screening assembly.

In certain aspects, using a "nip" or dual opposed rollers (optionally under pressure) between which multiple screen layers being glued together are passed, glue moves and/or is squeezed upwardly between mesh in the screening layers. In one aspect a bottom nip roller (in one embodiment coated with a non-stick substance or tape) pushes up against a lower surface of a bottommost screen layer, preventing glue from moving down and out from the screen layer. Optionally, such a bottom roller may be cooled (by any known method and/or device or apparatus, including but not limited to, those disclosed or referred to herein), thus increasing the viscosity of at least lower portions, if not a large portion of the glue and inhibiting downward travel of the glue. The wires or strands of the mesh(es) restrict side-to-side glue movement and the glue, therefore, can only travel up into layers above a layer or layers to which the glue was initially applied. Optionally, the top roller is heated by any known method and/or device or apparatus (including, but not limited to, any disclosed or referred to herein), which heats upper parts and/or layers of mash(es) which results in the heating of upper portions of glue that has been applied to one or more layers, thus reducing the viscosity of these portions and facilitating upward passage of the glue through the upper layer(s) of screening material. Optionally the two rollers are forced together (in one aspect a pressure between about twenty to about fifty p.s.i.) squeezing screening layers together and forcing glue to move up through the mesh of the layers. For a better understanding of the present invention, reference will now be made, by way of example, to the accompanying drawings in which:
Figure 1 is a top view of a prior art apparatus for facilitating production of a screen, the apparatus comprising a payout station, a gluing station, a laminating station and a finishing station;
Figure 2', 2" show a side view of the prior art apparatus shown in Figure 1, with dash-dot lines indicating paths of travel of layers of mesh which combine to form a screen;
Figures 3' and 3" show a side view of an alternative prior art apparatus, with dashed lines indicating paths of travel of layers of mesh which combine to form a screen;
Figure 4 is a side view of a finishing section of an apparatus for facilitating production of a screen, which apparatus is in accordance with the present invention;
Figure 5 is a top view of textured PTFE tape used on rollers used in the apparatuses shown in Figures 1 to 4;
Figure 6A is an end view and Figure 6B is a side view of a roller used in the apparatuses shown in Figure 1 to 4;
Figure 7 is a top view of part of the finishing station shown in Figure 4;
Figure 8 is a side view of a stack of screens;
Figure 9 is a perspective view of a screen assembly;
Figure 10 is a side view and Figure 11 is a front view of a heating apparatus;
Figure 12A is an exploded end view of a screen assembly;
Figure 12B is a schematic top view of a coarse mesh layer of the screen assembly shown in Figure 12A, showing glue beads thereon;
Figure 12C is a top view of the screen assembly of Figure 12A; and
Figure 13 is a top view of a screen assembly.

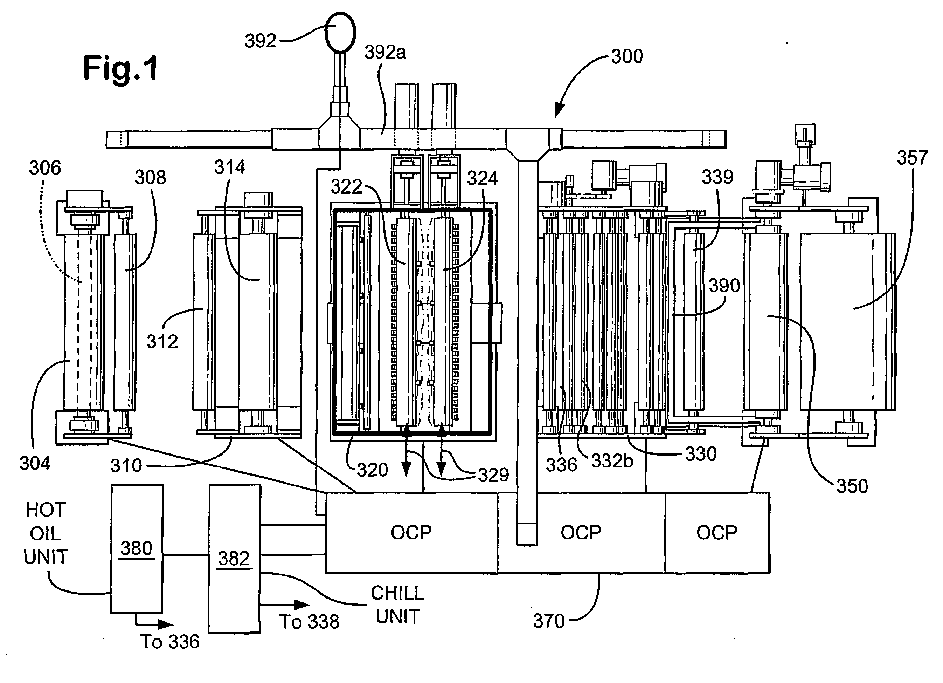

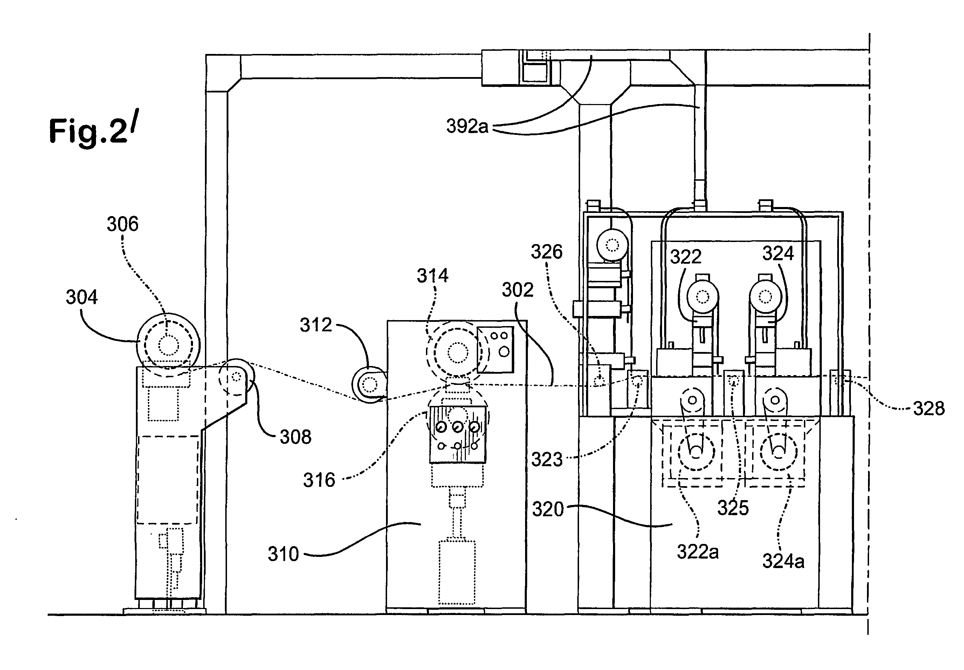

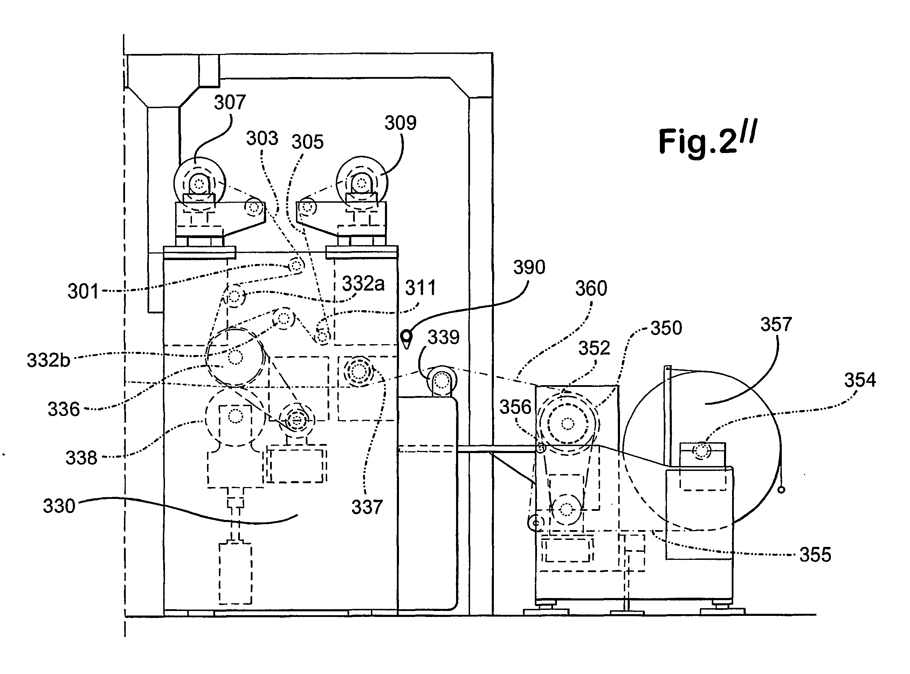

Figures 1 and 2' to 2" illustrate a prior art apparatus 300 for facilitating production of screens. A layer of screen mesh 302 is unwound from a roll 304 rotatable on a shaft 306 and moves over an idler roller 308 to isolation nip apparatus 310 forming a payout station.

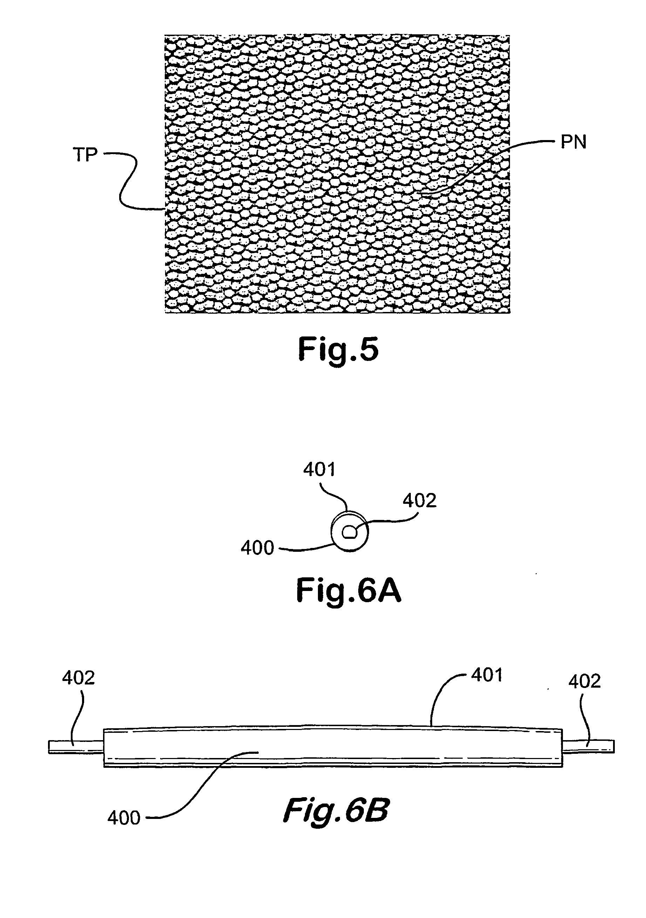

The isolation nip apparatus 310 receives the layer of screen mesh 302 which passes under an idler roller 312 and then between two opposed rollers 314, 316 which help guide the mesh 302 in a straight path and provide tension to help maintain the mesh 302 relatively flat. In certain aspects, a brake may be used on the isolation nip apparatus; in other aspects, unlike isolation nip apparatus used in certain other industries and for producing certain other glued products, the rollers 314, 316 are, optionally, not "braked," i.e., no brake is applied to them so that wrinkling, or "quilting" of the screen mesh 302 is inhibited or prevented. By coating and/or wrapping one or both rollers 314, 316 with non-slip material, e.g., plastic, rubber, or polytetrafluoroethylene material (e.g., but not limited to in tape form or in textured tape form, see. e.g., Fig 5) slippage (e.g. laterally on the roller) of screen material on, against, over, or with respect to the rollers is inhibited or prevented, thus inhibiting or preventing unwanted screen layer vibration and wrinkling.

The screen mesh 302 is fed from the isolation nip to gluing station 310 to a coating module 320 that has one, two, or more manifolds with multiple, spaced-apart glue dispensing nozzles, such as those disclosed in PCT Publication Nos. WO 01/39862 or WO 03/033102. Heated glue is provided to the manifolds by a glue apparatus 392 via piping 392a (parts of which serve as structural support) which has pump apparatus for pumping heated glue to the manifold(s). Two such manifolds 322, 324 are shown. The screen mesh 302 moves over idler rollers 326, 328 and beneath the manifolds 322, 324. Optionally additional idler rollers 323, 325 may be used to facilitate screen mesh movement and to assist in maintaining the screen mesh flat beneath the manifolds 322, 324. Any idler roller 323, 325, 326, 328 (and any idler roller in any other part of the apparatus of Figure 1) may be removed or may be replaced with a stationary member such as a bar, beam, or rod. Arrows 329 indicate the directions of motion of the manifolds 322, 324 which are moved by manifold movement apparatuses 322a and 324a, respectively. In one aspect the manifolds move in opposite directions with respect to each other. Nozzles arranged on the manifolds 322 and 324 apply glue to the layer of screening material 302 in a predetermined pattern, such as a continuous series of diamonds, by movement of the layer of screening material moving in a longitudinal direction and the manifolds 322, 324 moving in a substantially transverse direction.

A laminating station 330 (also called "laminator nip station") combines the glue-laden screen mesh 302 with one, two, or more additional layers of screening material and a glued-together screen combination 360 exits from the laminator apparatus 330.

In the apparatus shown in Figures 1, 2' and 2", a second screening material layer 303 is unwound from a roll 307 moving against a roller 301; and a third screening material layer 305 moving against a roller 311 is unwound from a roll 309. These layers pass, respectively, around rollers 332a and 332b and then around a top laminating roller 336. Figures 2" present different positions (each optional) for the rollers 301, 311, 332a, and 332b.

The three layers - screen mesh 302, screening material layers 303, 305 - pass between the top laminating roller 336 and a bottom laminating roller 338 which squeezes the layers together. The resulting glued-together screen combination 360 passes under a roller 337 and then over a roller 339. Rollers help reduce or eliminate mesh layer vibration and reduce wear on shafts on which they are mounted. Coated and/or taped rollers reduce or eliminate glue adherence to rollers.

The rollers 332a and 332b may be contoured or bowed as shown in Figures 6A and 6B and are sometimes referred to as "banana rolls." A roller 400 as in Figures 6A and 6B has a contoured body 401 and end mounting shafts 402. Optionally rollers 332a and/or 332b may be such banana rollers, as, optionally, may be any other roller in the system. These last rollers past or over which the mesh passes prior to entering between the rollers 336, 338 maintain the mesh in a desired flat and/or spread-out manner, inhibiting wrinkling and facilitating the deposition of a uniform desired glue bead.

The hot glue is spread up through the layers of screening material by: squeezing the rollers 336, 338 together; by heating the roller 336; by cooling the roller 338; by blowing hot air on the layer(s) entering the rollers; by heating the rollers or any of them past or against which the layer(s) move; and/or by replacing any such rollers with a heated stationary, shaft, bar or beam past or against which the layer(s) move.

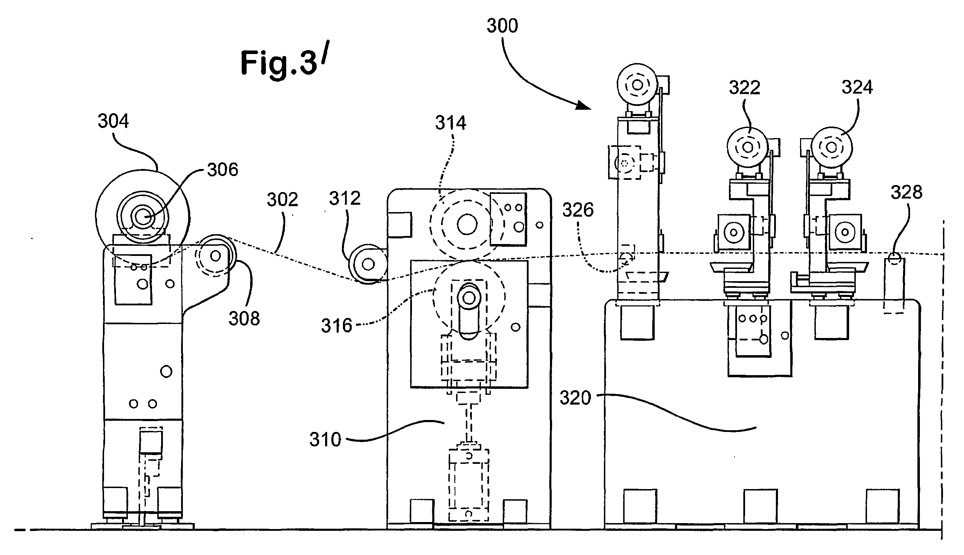

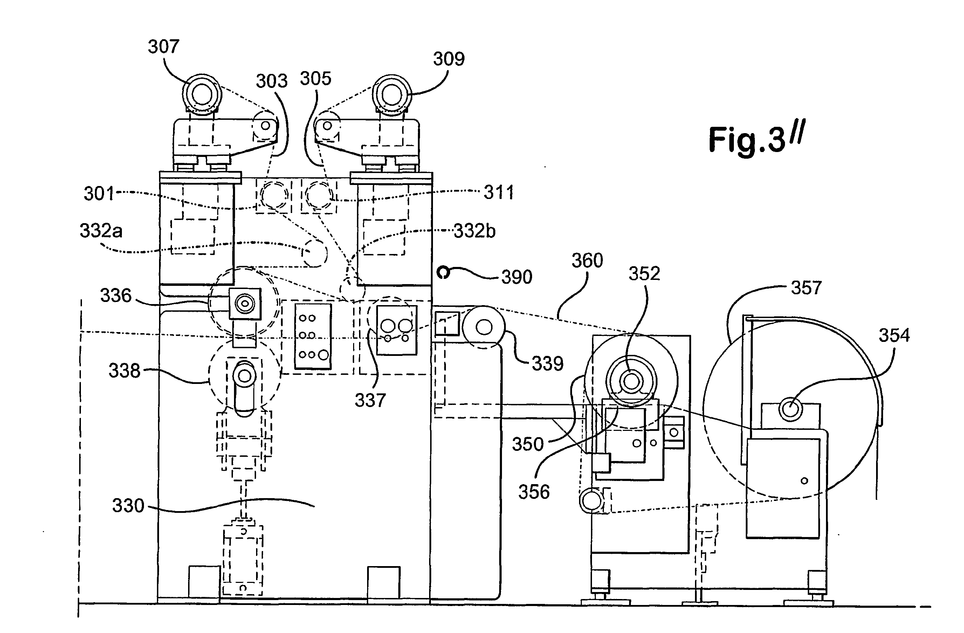

The curing glued-together screen combination 360 moves on to a finishing station, wherein the curing screen moves under a roller 337; then, optionally, over a roller 339; and then onto a hollow cardboard tube or roll (or other suitable mount) 352 from which it is rolled into a roll 350. Separator material 355 (e.g., kraft paper, etc.) from a roll 357 is on a central tube or shaft 354 is rolled up with the screening material 360 to inhibit or prevent the screening material adhering to itself in the roll 350. The roll 350 is removable from supports 356. Figures 3' and 3" show the same layout of stations and the stations perform the same functions as the apparatus shown in Figures 1, 2' and 2", and like parts are identified with like numerals.

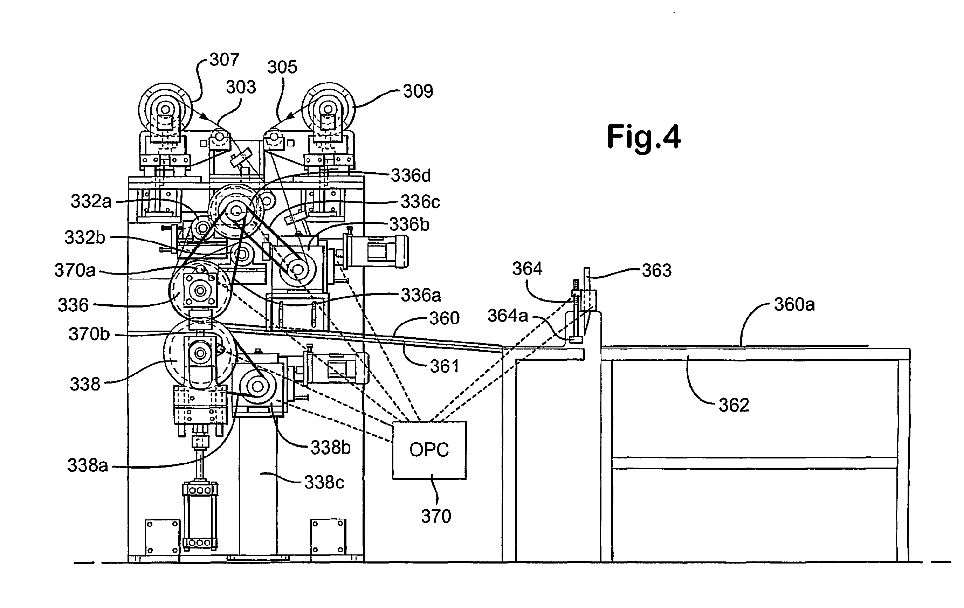

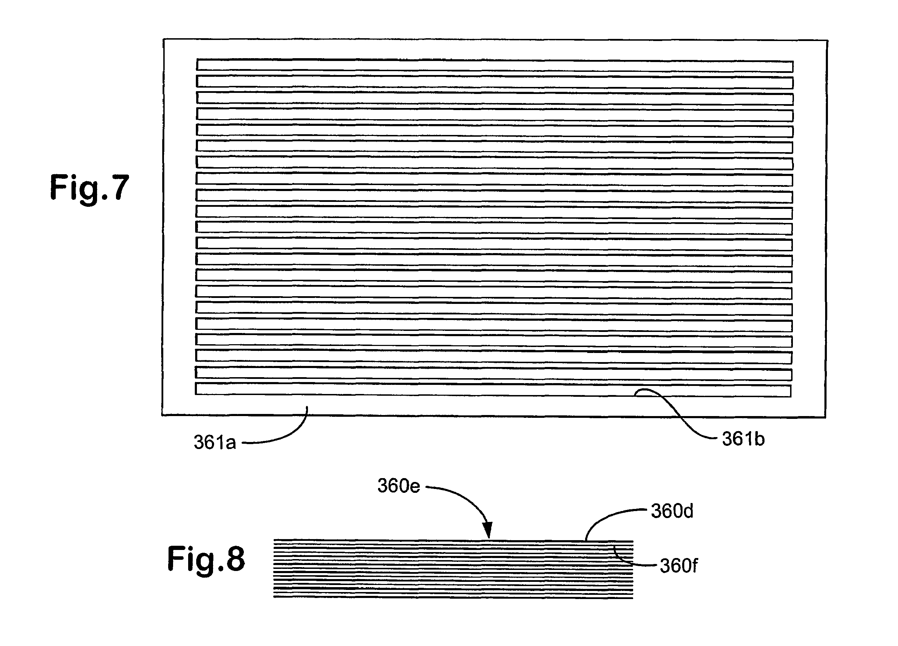

Referring to Figure 4, there is shown an alternative laminating and finishing stations to those shown in Figures 1 to 3". A tray, table and cutting apparatus is used to produce individual separate sheets of the glued-together screen combination 360 which, in one aspect, are usable for screen assemblies without further significant cutting or trimming. The top and bottom laminating rollers 336, 338, respectively move the combination 360 onto a tray 361 or other suitable support. In one aspect the tray 361 is horizontal. As shown in Figure 4, the tray 361 is inclined downwardly to facilitate movement of the combination 360 from the rollers 336, 338 over the tray 361 and onto a table 362. The rollers 336 continuously feed the laminated screen from the rollers and cut whilst being fed. When a desired length of the glued-together screen combination 360 is on the table 362, a cutter 363 is lowered and moved across the combination 360, cutting a piece 360a which is then removed from the table 362. Any suitable support may perform the job of the table 362. Holders 364 (one shown in Figure 4) are moved down (either automatically or manually) and a lower part 364a pushes against the screen combination 360 to hold it firm and stable for an accurate, clean cut. The tray 361, table 362 or both may have openings, perforations, slits, or slots to facilitate air movement and cooling of the screen combination 360; e.g., as shown for the tray 361a in Figure 7 which has a series of openings 361b therethrough for air flow.

Optionally, the bottom laminating roller 338 is driven by a belt 338a which is driven by a motor 338b mounted adjacent the roller 338, e.g. on a pedestal 338c; and the top laminating roller 336 is driven by a motor 336b. In one aspect the motor 332b drives the roller 336 directly, e.g. via a belt or chain or with a direct drive connection. As shown in Figure 4, a clutch device 336d is interposed between the motor 336b and the roller 336. A belt 336c between the motor 336b and the clutch device 336d drives the clutch device 336d and a belt 336a between the clutch 336d and the roller 336 drives the roller 336. The clutch device 336d facilitates the production of a flat screen combination which helps to reduce areas of non-uniform glue thickness. The rollers 336, 338 are synchronized to rotate in synchronized manner, e.g., turn at the same number of revolutions per minute, i.e. in one aspect the clutch device 336d slips if the top roller tries to go faster than the bottom roller so that between 1 and 30 feet per minute of combination 360 exits from between the rollers; and in one particular aspect at about 5 feet per minute and a piece of the screen combination 360 about 45" x 52" is cut with one movement of an automatic cutter 363. It is within the scope of this invention to drive both rollers 336 and 338 with one drive motor, using suitable gearing and belts between the single motor and the drive rollers.

The tray 361 and/or the table 362 may, according to the present invention, be coated to facilitate movement of a screen combination thereon, e.g. with plastic, fiberglass, composite material, polyethylene and/or polytetrafluoroethylene. As desired a lubricant, e.g. silicone lubricant, can be sprayed on the roller surfaces, the tray, and/or the table.

To inhibit glue from sticking on the rollers 336, 338 either or both of them may be covered with wax paper. To inhibit pieces of cut screen combination from sticking together, pieces of wax paper or the like may be placed between sheets in a stack of cut pieces; e.g., as shown in Figure 8 pieces of screen combination 360d cut from the screen combination 360 are in a stack 360e interleaved with pieces of wax paper 360f. It is within the scope of this invention to use any material for the sheets 360f which will inhibit the layers 360d from adhering to each other.

The apparatuses shown in Figures 1 and 2', 2", and 4 are controlled by controller apparatus 370 (or "OCP") which may have one or more operator's control panels. The controller apparatus 370 can be set for various screening material of various dimensions and for various glues and glue patterns. The control apparatus 370 controls the rollers, shafts, motors, clutch, pumps, manifolds, dispensers, and other apparatus of the system. Control connections and lines are indicated by dash-dot lines to various system components. The pressure applied to nip rollers is controlled by the control apparatus 370 and/or by control apparatus at the location of the rollers, as may be the water misting apparatus 390. The "Hot Oil Unit" 380 provides heated fluid (e.g. oil) to heat the roller 336, e.g., by pumping heated fluid (e.g., oil) into the roller 336. The "Chill Unit" 382 provides cooling fluid to cool the roller 338, e.g., by pumping cooled fluid into the roller 338. Sensors 370a (for the roller 336) and 370b (for the roller 338) sense speed of these rollers and convey a signal indicative thereof to the controller apparatus 370 for controlling the speed of the rollers and maintaining their synchronization. Dash-dot lines between the motors 336b, 338b; the clutch apparatus 336d; the clamping apparatus 364; and the cutting apparatus 363 indicate control of these items by the controller apparatus 370. From the speed of the rollers 336 and 338, the length of screen dispensed through the laminating station is calculated. The controller 370 is able to calculate the length of screen on the table 362 from the speed of the rollers, which is used in activating the cutter 363 to form a screen unit 360a.

A water applicator 390 may be used to spray a mist of moisture onto the screen combination 360 to facilitate curing of moisture-cured glue. In one aspect (as shown) the water applicator is positioned to spray the screen combination 360 between rollers 337, 339. In another embodiment, it is positioned before the rollers 336, 338. Alternatively, multiple misters are used in multiple locations. When water is applied in the position between rollers 337 and 339 curing of the glue is facilitated and occurs relatively quickly, i.e., in twenty to thirty hours as compared to six to seven days when water is applied before the layers enter between the laminator rollers. Also, in addition to speeding up curing of the glue, the tackiness of the glue in the resulting screen combination 360 is reduced which facilitates shearing, handling, shipping, and the application (optional) of side hookstrips. In one aspect the water application 390 includes six spaeed-apart 230mm (nine inch) spray nozzles through which water at a rate of about three-tenths of a gallon per hour is sprayed onto the screen combination.

In certain particular embodiments the screen mesh 302 is a coarse mesh of preferably stainless steel 19 mesh wire; the screening material layer 303 is 100 or 180 mesh; and the screening material layer 305 is 130 or 250 mesh - all about 1.3m, 1m, 0.8m (50, 38, or 30 inches) wide.

Figure 5 shows a piece TP of textured PTFE tape which may be used according to the present invention to wrap rollers used in systems according to the present invention; including, but not limited to, the bottom and/or top rollers of a nip apparatus that receives one or more mesh layers with hot glue thereon and/or therein. A pattern PN shown on the tape is imparted to heated glue contacted by the tape.

When moisture-curing hot melt glue is used, it cures with loss of heat and exposure to moisture. In a typical room at ambient temperature such glue will cure over time without any extra moisture applied to it. With apparatus as in Figures 2',2" and 3',3", glue is discharged down onto the mesh. At about 394K (250°F). the glue's temperature begins to drop when it contacts the wire and begins curing when exposed to moisture. The distance between the glue nozzles and a laminating nip is, preferably, such that the glue does not progress too far in the curing cycle. The laminating nip squeezes the meshes together. The top roller, optionally, heats the wires in contact with it, reducing the viscosity of the glue that contacts the top layers. The open spaces in the meshes provide vertical tunnels allowing the glue to move upward. The bottom roller cools the bottom side of the bottom mesh increasing the viscosity of the glue's bottom surface, increasing its resistance to flow downward. The laminating nip rollers pull the wire meshes through the system. The top roller may be a heated steel roller that heats upper and/or finer meshes to facilitate the flow of glue into their open spaces.

Due to the smoothness of a roller (e.g., but not limited to, a roller made of steel or other metal) and the fineness of the top mesh layers, there may be slippage between the top and bottom layers. The addition of textured tape on the roller(s) allows the transfer of heat to the upper mesh(es). The texture and softness of the tape grips the upper and/or finer meshes and inhibits or prevents this slippage. The softness of the tape inhibits or prevents glue from extruding above the upper and/or fine mesh(es) upper surface(s) creating obstacles or barriers to flow across the screen surface.

After winding in a roll (e.g. roll 350, Figure 3',3") the layered mesh rolls may be sheared, boxed, and shipped to an end user. Without the water mister between rollers 337, 339 the layered mesh combination 360 may take five to seven days to cure adequately. Often after shearing, the multi-layer screen combinations are stacked in a box for use or shipment. If the cure of the glue is not sufficient, the screens may stick to each other. A non-stick paper or cardboard placed between the screens may inhibit or prevent this sticking together. The placement of the mister after the laminating nip and before winding material onto a roll has reduced glue cure time to about a day.

By maintaining flat the layer or layers which receive the hot glue from one or more dispensing nozzles, uniformity of deposited glue bead size is enhanced. If the distance between the nozzle and the layer(s) varies, glue bead size can be non-uniform. In one aspect the distance from the outlet end of the nozzle(s) to the mesh layer or layers onto which the glue is deposited is between about 6mm to 19mm (one-fourth to three-fourth inches), and in one particular aspect is about 13mm (one-half inch). Rotating rollers help reduce vibration in the mesh layer(s) being processed.

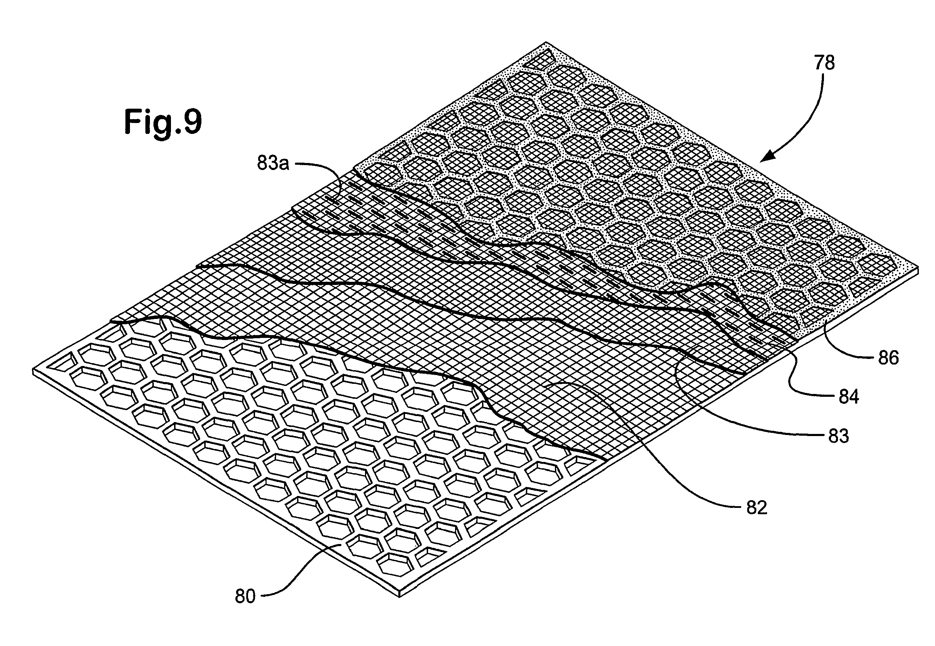

Figure 9 shows a screen assembly 78 (sown with various layers partially cut away but which extend across the surface of the screen assembly) made by a method according to the present invention as described herein and in WO 2004/022252 (U.S. Application Ser. No. 10/614,697 filed 7/7/2003) above wherein the two upper fine mesh layers are sewn-together screening material layers 83 and 84 sewn together with stitching 83a (which extends over substantially all the surface of the two layers but is only shown partially for purposes of illustration); the coarse mesh layer is layer 82; the support is a perforated plate 80 which is initially coated with epoxy 86 which upon curing, assumes a pattern like that of the openings of the perforated plate 80. Optionally either layer 83 or 84 may be deleted (thereby eliminating the step of sewing two fine mesh layers together).

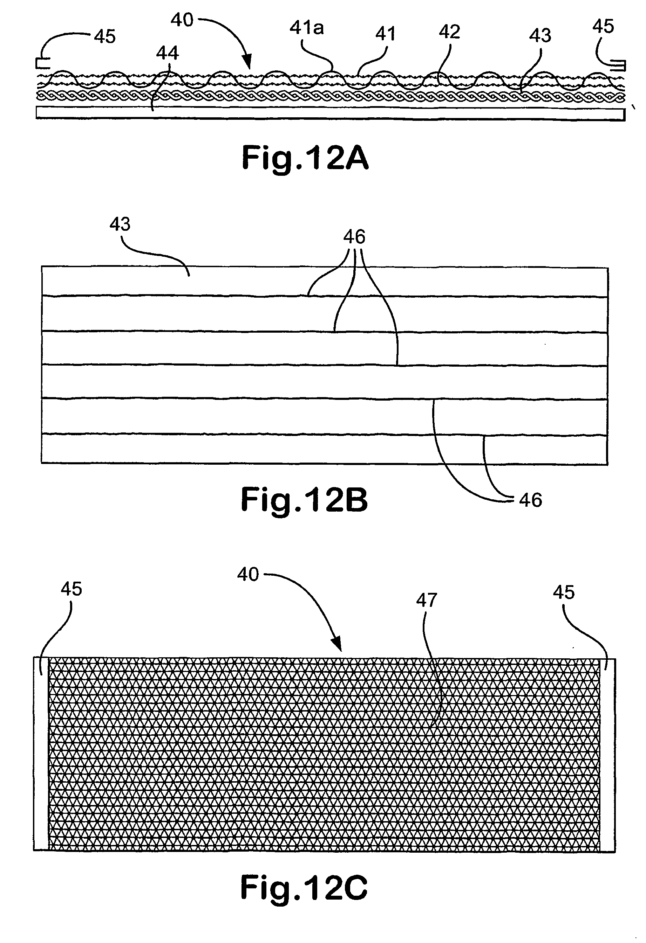

Figures 12A - 12C show a screen assembly 40 according to the present invention which has two sewn-together upper screening layers 41, 42 made of fine screening material [sewn by any method described or referred to herein, e.g. with thread 41a shown for the purposes of illustration loose and not in a tightened sewn stitch]; a coarse mesh layer of screening material 43; and a perforated plate support 44. Hookstrips 45 extend along opposed sides of the screen assembly 40. The hookstrips 45 are shown as "C" shaped, but it is within the scope of this invention to use any known hookstrip shape or configuration. Any known fine screening mesh and coarse mesh may be used for the layers 41, 42 and 43, respectively, including, but not limited to, those described or referred to above. Any suitable known plate may be used for the plate 44.

Figure 12B shows a plurality of glue beads 46 extending across the coarse mesh layer 43 (the actual mesh and weave of the coarse mesh layer is not shown in Figure 12B). Any desired number of beads 46 may be used from one to seven or more. Optionally, the beads extend lengthwise (from top to bottom in Figure 12B) rather than across the coarse mesh layer. Optionally a pattern of beads that intersect is used on the coarse mesh layer, including, but not limited to, in any pattern disclosed or referred to herein. Optionally, the plate 44 is deleted. Optionally, the plate 44 and hookstrips 45 are deleted and a frame or strip support is used. Optionally the plate 44 is deleted and a strip support is used.

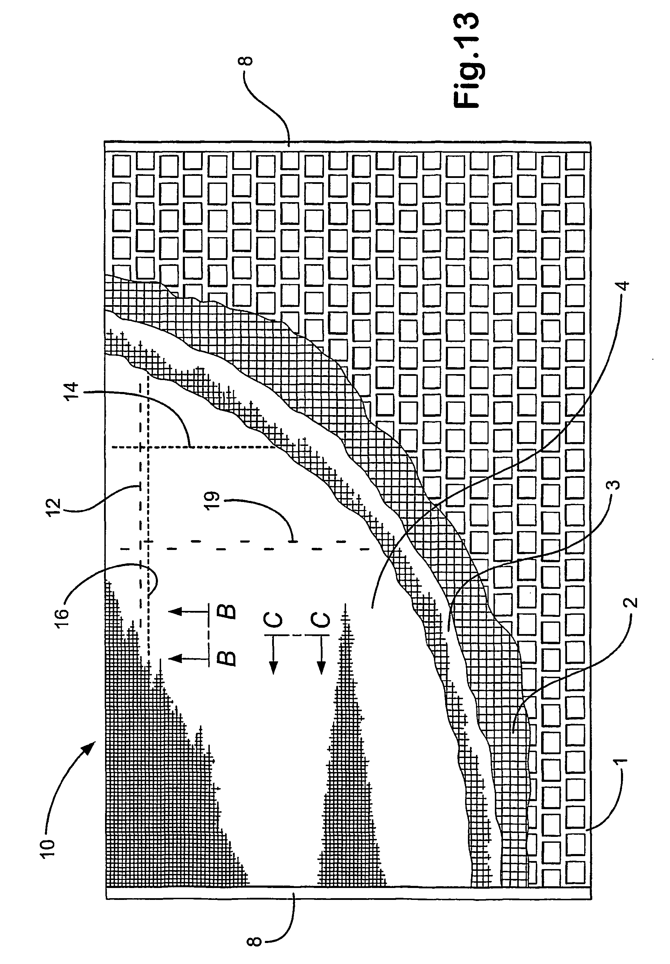

Figure 13 shows a screen assembly 10 with some parts like those of prior art U.S. Patent 4,575,421; however as described below, various parts of the screen assembly 10 are held together by sewing material (e.g. thread, wire, string, filaments, cord, twine, yard or fiber). U.S. Patent 4,575,421 is incorporated here fully for all purposes, including, but not limited to the parts of the screen assembly 10 which are like the parts of the screen assemblies in the patent. Sides 8 may be any known channel-shaped member, hookstrip, or frame sides. Alternatively a rigid frame with four sides may be used.

A plurality of layers of screening material 2, 3, and 4 are positioned above a plate 1 (like the plates, including but not limited to the plate 11, in U.S. 4,575,421). The layers 2, 3 and 4 are like the layers, respectively, 24, 25, 26 as described in U.S. Patent 4,575,421. It is, however, within the scope of this invention to delete any one or two of the layers and for any of the layers 2, 3, 4 to be any screening material or mesh disclosed herein or combination thereof; and it is within the scope of this invention for the plate 1 to be any support plate structure screen, frame, or series of strips (although these things are not legal equivalents) known in the art.

The layers 2, 3, 4 are sewn together by sewing material. Exemplary lines of sewing material 14 and 16 are shown in Figure 13. It is to be understood that such lines of sewing material sewing the layers together may extend in spaced-apart fashion over substantially all of the surface of the layers with any desired spacing between lines of sewing material. It is also within the scope of this invention for the sewing material to be in lines that are generally parallel to the sides of the screening layers, as shown; for the sewing material lines to extend diagonally across the screening material; for the sewing material lines to be at an angle other than diagonal across the screening material; and/or for lines of sewing material to intersect, forming any desired pattern including, but not limited to, a pattern corresponding to shapes formed by members of a lower supporting mesh, structure or plate. Such lines of sewing material may also be used to join together either layers 2 and 3, 2 and 4, and/or layers 3 and 3004.

Lines of sewing material 19 and 12 sew together the plate 1 and the layers 2, 3 and 4. The lines 19 and 12 may take any of the forms and positions described above for the lines 14, 16. In one aspect "edge stitching" may be used to sew screening material to the plate. It is also within the scope of this invention to sew one, two, three or more layers of screening material to a frame that supports the screening material.

The sewing material used to sew together any two or more layers of screening material and/or mesh, or any support structure or plate and one or more layers of screening material may be any suitable known sewing material, including, but not limited to, thread, wire, yarn, string, twine, cord, and filament line (any of which may be mono- or multi- strand or filament with different or similar strands or filaments in multicomponent sewing material). Such sewing material may be made, e.g., of natural, plastic, or synthetic thread, yarn, cord or wire materials; composite materials; polymer(s); elastomer(s); rubber; phenolic resin(s); metal (including but not limited to steel, stainless steel, bronze, brass, copper, zinc, aluminum and any combination or alloys of them); KEVLAR material; and polytetrafluoroethylene or Teflon material - any of which may be coated with plastic, metal, polymer, elastomer, or resin. Sewing material of any cross-sectional surface area and/or cross-sectional shape (or of any suitable diameter) may be used. Different sewing materials may be used for different stitches and/or lines of stitches on a single screen or screen assembly. The needle(s) used may be any suitable known needle and may be made of any suitable metal, plastic, composite, and/or fiberglass material. In one particular aspect KEVLAR thread with a diameter of 0.23mm (0.009 inches) is used. In one particular screen using such KEVLAR thread there are three layers of screening material sewn together.

The sewing together of any two or more items may be done according to the present invention by hand, with a manually operated sewing device or machine, or with any automatic sewing machine. Any known sewing stitch or pattern may be used. In certain aspects a sewing needle is used which is sized so that damage to the layers and/or support is minimized or eliminated. In one such aspect, a needle is selected of such size that it penetrates between and moves between adjacent wires or screen components rather than making a dent, gouge, gash, tear or recess in a wire (or screen component) of a screen and rather than breaking or weakening a wire of a screen.

Any stitch or line of sewing material may, optionally, be deleted from the screen assembly 10 (or from any sewn screen assembly disclosed herein). It is within the scope of this invention to delete all lines 14, 16 and all lines sewing together the layers of screening material 2, 3, 4 and to rely on the lines 19, 12 and others spaced-apart from them that sew together all of the layers of screening material and the plate 1. Alternatively between lines like the line 19, lines like the line 14 may be used to hold the layers 2 - 4 together (and likewise for lines like 12 and 16).

U.S. Patent 4,575,421 refers to an adhesive or bonding that secures parts together. The screen 10 may be made with no such adhesive or bonding. Alternatively, such adhesive (e.g., but not limited to, glue or epoxy) or bonding may be used in addition to any sewing material described above; or a combination of one or more spaced-apart lines of sewing material and adhesive between and/or on or beneath such lines may be used. In one aspect the layers 2 - 4 may be adhesively secured together and lines like the lines 19 and/or 12 used to sew the layers to the plate 1, or the layers 2 - 4 are sewn together and then adhesively secured to the plate 1. Any two or more metal layers and/or plate may be sintered together over a portion or over substantially all of this area. One or more separate, individual stitches or knots of sewing material may be used instead of a line of a continuous thread, etc. for any line of sewing material described herein.

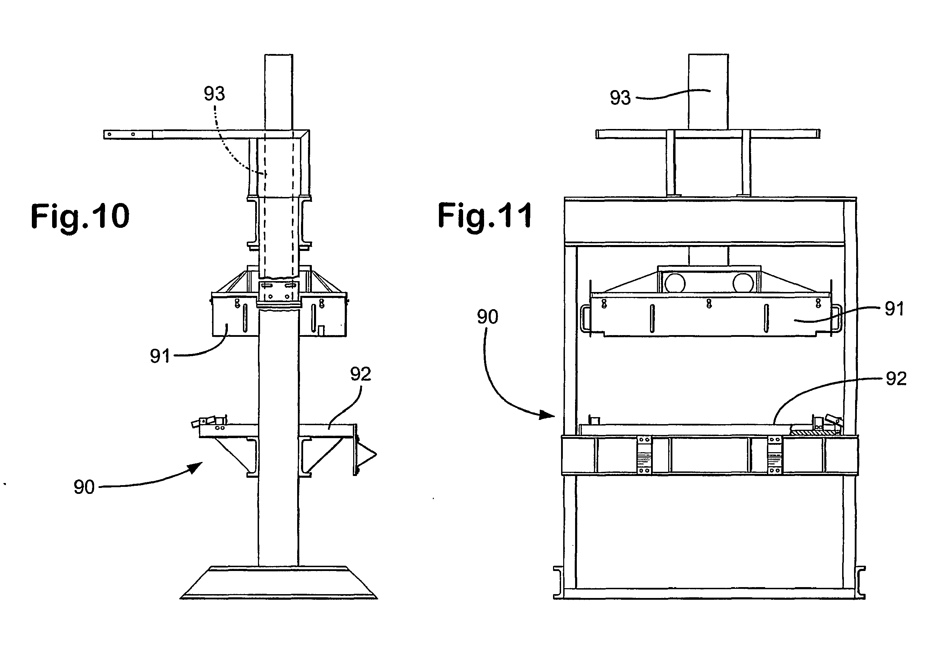

Figures 10 and 11 show a heated platen apparatus for use in methods described above with an upper movable heatable member 91 and a tray, bed or support 92 on which screen assembly layers and frame (or plate) are positioned. The member 92 is movable by a moving apparatus 93 shown schematically in Figures 10 and 11. Alternatively, the tray 92 can be heated with or without heating the member 91.

In one particular aspect of such a method to produce such a screen assembly, a two layer screen combination with a layer of 160 mesh and a layer of 180 mesh, both stainless steel wire meshes, is produced by sewing the two layers together according to the present invention with a stitch pattern according to the present invention, including, but not limited to, with a lock stitch. A layer of coarse mesh (20 mesh, stainless steel) with one, two or more lengthwise glue beads (in one aspect, four equally spaced-apart glue beads from one side to the other, straight or in a curved shape as viewed from above; and in one aspect a plurality of glue beads about 3 1/16" apart or about 1 11/32" apart) (produced by a glue machine according to the present invention) is placed on top of the two finer mesh layers in a heated platen and a tubular frame made of carbon steel with four sides and a plurality of crossbars (e.g., but not limited to, nine spaced-apart) is placed on top of the coarse mesh, the tubular frame coated with semi-cured epoxy material, e.g., but not limited to as described in U.S. Patents 6,267,247; 6,290,068; and 5,876,552, all incorporated fully herein for all purposes. The platen is closed and the components are heated at about 450 F for about 10 to 18 minutes. The resulting screen assembly is removed from the platen and allowed to cool. Optionally, only one fine mesh layer is used. Optionally, heating and/or preheating for any step of any method herein can be accomplished in an oven. Optionally, the coarse mesh layer is first joined to the two layers of screening material and then the resulting three layer combination is joined to a frame or support.

## Claims

1. A method for making a screen unit for a screen assembly, the method comprising the steps of applying glue to at least one layer of the mesh and applying at least one further layer of mesh by passing the at least one layer and one further layer of screening material through a nip of a pair of rotating rollers to form a laminated screen, **characterised by** said laminated screen moving on to a table of a finishing station and holding said laminated screen while being cut into a discrete screen unit with a cutting device, the screen continuously fed from the nip of the pair of rotating rollers and continuously cut.

2. A method in accordance with Claim 1, wherein the table has openings therein through which air can flow, the method further comprising the step of cooling the screen passing thereover using air flowing through said openings.

3. A method in accordance with Claim 1 or 2, wherein a tray leads from said laminating station to said table the method further comprising the step of moving the screen thereover.

4. A method in accordance with Claim 3, wherein the tray has openings therein through which air can flow, the method further comprising the step of cooling the screen moving thereover using air flowing through said openings.

5. A method in accordance with Claim 3 or 4, wherein said tray is angled downwardly away from said laminating station and to said table, the method comprising the step of moving the screen along said downwardly angled tray to said table.

6. A method in accordance with any preceding claim, further comprising wherein the pair of rollers comprises an topr roller and a bottom roller, the method further comprises the step of cooling the bottom roller.

7. A method in accordance with any preceding claim, wherein one of the pair of rollers is provided with a clutch, the method comprising the step of using the clutch to maintain equal speeds of rotation of the rollers.

8. A method in accordance with any preceding claim, wherein one of the pair if rollers is driven by a first motor and the other roller is driven by a second motor, the method comprising the step of controlling the relative speeds of the rollers to produce a relatively flat planar screen.

9. A method in accordance with any preceding claim, wherein the speed of rotation of said pair of rollers is controlled using an electronic controller.

10. A method in accordance with any preceding claim, wherein said cutting device comprises a cutter arranged on a bar which lies substantially transverse to the direction of said screen, said cutter slideable along said bar the method further comprising the step of drawing the cutter along said bar to out said screen into discrete screen units.

11. A method in accordance with any preceding claim, comprising a controller and sensors for measuring the screen length on the table, the method further comprising the step of activating the cutting device in response to the measured length reaching a predetermined value.

12. An apparatus for use in carrying out the method in accordance with any preceding claim, the apparatus comprising a laminating station having a glue application station (310) and at least two rotating rollers forming a nip through which layers of mesh are laminated to form a laminated screen and a finishing station comprising a table (362) and a cutting device (363) for cutting said laminated screen **characterised in that** said finishing station further comprises a clamping apparatus (364,364a) for holding the laminated screen whilst the cutting device (363) cuts said laminated screen (360) into discrete screen units (360a).

13. An apparatus as claimed in Claim 12, wherein said table (362) comprises openings (361b) through which air can flow to facilitate cooling of said screen.

14. An apparatus as claimed in Claim 12 or 13, further comprising a tray (361) leading from said laminating station to said table (362).

15. An apparatus as claimed in Claim 14, wherein said tray (362) comprises openings (361b) through which air can flow to facilitate cooling of said screen.

16. An apparatus as claimed in claim 14 or 15, wherein said tray is angled downwardly away from said laminating station and to said table (362).

17. An apparatus as claimed in any of Claims 12 to 16, wherein said at least two rollers comprises an upper roller (336) and a lower roller (337) arranged to form a nip through which said layer of mesh (302,303,305) pass.

18. An apparatus as claimed in Claim 17, wherein one of said upper roller (336) and lower roller (338) is provided with a clutch (336d).

19. An apparatus as claimed in Claim 17 or 18, wherein said upper roller (336) is driven by a first motor (336b) and lower roller (338) is driven by a second motor (338b).

20. An apparatus as claimed in Claim 190, further comprising a belt (338a) arranged between the lower roller (338) and said second motor (336b).

21. An apparatus as claimed in any of Claims 17 to 20, wherein the speed of rotation of said upper and lower rollers (336,338) is controlled using a controller (370).

22. An apparatus as claimed in any of claims 12 to 21, wherein said cutting device (363) comprises a cutter arranged on a bar (364) which lies substantially transverse to the direction of said screen, said cutter slideable along said bar such that in use, said cutter is drawn along said bar to cut said screen into discrete screen units (360a).

23. An apparatus as claimed in any of claims 12 to 22, comprising a controller (370) and sensors for measuring the screen length on the table (362) and activating the cutting device in response thereto.

## Patentansprüche

1. Verfahren zum Herstellen einer Siebeinheit für eine Siebanordnung, wobei das Verfahren die folgenden Schritte umfasst: Ausbringen von Klebstoff auf wenigstens eine Schicht des Gitters und Aufbringen wenigstens einer weiteren Gitterschicht durch Bewegen der wenigstens einen Schicht und einer weiteren Schicht aus Siebmaterial durch einen Walzenspalt aus einem Paar rotierender Walzen, um ein laminiertes Sieb zu bilden, **dadurch gekennzeichnet, dass** das laminierte Sieb auf einen Tisch einer Endbearbeitungsstation bewegt wird und dass das laminierte Sieb gehalten wird, während es durch eine Schneidvorrichtung in diskrete Siebeinheiten geschnitten wird, wobei das Sieb ausgehend von dem Walzenspalt aus dem Paar rotierender Walzen ununterbrochen zugeführt und ununterbrochen geschnitten wird.

2. Verfahren nach Anspruch 1, wobei in dem Tisch Öffnungen vorgesehen sind, durch die Luft strömen kann, wobei das Verfahren ferner den Schritt des Kühlens des sich darüber bewegenden Siebs unter Verwendung von durch die Öffnungen strömender Luft umfasst.

3. Verfahren nach Anspruch 1 oder 2, wobei ein Tablett von der Laminierungsstation zu dem Tisch führt, wobei das Verfahren ferner den Schritt des Bewegens des Siebs über das Tablett umfasst.

4. Verfahren nach Anspruch 3, wobei in dem Tablett Öffnungen vorgesehen sind, durch die Luft strömen kann, wobei das Verfahren ferner den Schritt des Kühlens des sich darüber bewegenden Siebs unter Verwendung von durch die Öffnungen strömender Luft umfasst.

5. Verfahren nach Anspruch 3 oder 4, wobei das Tablett weg von der Laminierungsstation und hin zu dem Tisch nach unten angewinkelt ist, wobei das Verfahren den Schritt des Bewegens des Siebs längs des nach unten angewinkelten Tabletts zu dem Tisch umfasst.

6. Verfahren nach einem vorhergehenden Anspruch, wobei ferner das Walzenpaar eine obere Walze und eine untere Walze umfasst, wobei das Verfahren ferner den Schritt des Kühlens der unteren Walze umfasst.

7. Verfahren nach einem vorhergehenden Anspruch, wobei eine der beiden Walzen mit einer Kupplung versehen ist, wobei das Verfahren den Schritt des Verwendens der Kupplung, um gleiche Drehgeschwindigkeiten der Walzen aufrecht zu erhalten, umfasst.

8. Verfahren nach einem vorhergehenden Anspruch, wobei eine der beiden Walzen durch einen ersten Motor angetrieben wird und die andere Walze durch einen zweiten Motor angetrieben wird, wobei das Verfahren den Schritt des Steuerns der Relativgeschwindigkeiten der Walzen, um ein verhältnismäßig flaches ebenes Sieb herzustellen, umfasst.

9. Verfahren nach einem vorhergehenden Anspruch, wobei die Drehgeschwindigkeit der beiden Walzen unter Verwendung einer elektronischen Steuereinheit gesteuert wird.

10. Verfahren nach einem vorhergehenden Anspruch, wobei die Schneidvorrichtung ein Messer umfasst, das an einer Stange angeordnet ist, die im Wesentlichen quer zu der Richtung des Siebs liegt, wobei das Messer längs der Stange gleiten kann, wobei das Verfahren ferner den Schritt des Ziehens des Messers längs der Stange, um das Sieb in diskrete Siebeinheiten zu schneiden, umfasst.

11. Verfahren nach einem vorhergehenden Anspruch, das eine Steuereinheit und Sensoren zum Messen der Sieblänge auf dem Tisch umfasst, wobei das Verfahren ferner den Schritt des Aktivierens der Schneidvorrichtung in Reaktion darauf, dass die gemessene Länge einen vorgegebenen Wert erreicht, umfasst.

12. Vorrichtung zur Verwendung bei der Ausführung des Verfahrens nach einem vorhergehenden Anspruch, wobei die Vorrichtung eine Laminierungsstation mit einer Klebstoffaufbringstation (310) und wenigstens zwei rotierenden Walzen, die einen Walzenspalt bilden, durch die Gitterschichten laminiert werden, um ein laminiertes Sieb zu bilden, und eine Endbearbeitungsstation mit einem Tisch (362) und einer Schneidvorrichtung (363) zum Schneiden des laminierten Siebs umfasst, **dadurch gekennzeichnet, dass** die Endbearbeitungsstation ferner eine Klemmvorrichtung (364, 364a) umfasst, um das laminierte Sieb zu halten, während die Schneidvorrichtung (363) das laminierte Sieb (360) in diskrete Siebeinheiten (360a) schneidet.

13. Vorrichtung nach Anspruch 12, wobei der Tisch (362) Öffnungen (361b) aufweist, durch die Luft strömen kann, um das Kühlen des Siebs zu erleichtern.

14. Vorrichtung nach Anspruch 12 oder 13, die ferner ein Tablett (361) aufweist, die von der Laminierungsstation zu dem Tisch (362) führt.

15. Vorrichtung nach Anspruch 14, wobei das Tablett (362) Öffnungen (361b) aufweist, durch die Luft strömen kann, um das Kühlen des Siebs zu erleichtern.

16. Vorrichtung nach Anspruch 14 oder 15, wobei das Tablett weg von der Laminierungsstation und hin zu dem Tisch (362) nach unten angewinkelt ist.

17. Vorrichtung nach einem der Ansprüche 12 bis 16, wobei die wenigstens zwei Walzen eine obere Walze (336) und eine untere Walze (337) umfassen, die dazu ausgelegt sind, einen Walzenspalt zu bilden, durch die sich die Gitterschicht (302, 303, 305) bewegen kann.

18. Vorrichtung nach Anspruch 17, wobei entweder die obere Walze (336) oder die untere Walze (338) mit einer Kupplung (336d) versehen ist.

19. Vorrichtung nach Anspruch 17 oder 18, wobei die obere Walze (336) durch einen ersten Motor (336b) angetrieben wird und die untere Walze (338) durch einen zweiten Motor (338b) angetrieben wird.

20. Vorrichtung nach Anspruch 19, die ferner einen Riemen (338a) umfasst, der zwischen der unteren Walze (338) und dem zweiten Motor (336b) angeordnet ist.

21. Vorrichtung nach einem der Ansprüche 17 bis 20, wobei die Drehgeschwindigkeiten der oberen und der unteren Walze (336, 338) unter Verwendung einer Steuereinheit (370) gesteuert werden.

22. Vorrichtung nach einem der Ansprüche 12 bis 21, wobei die Schneidvorrichtung (363) ein Messer umfasst, das an einer Stange (364) angeordnet ist, die im Wesentlichen quer zu der Richtung des Siebs liegt, wobei das Messer längs der Stange gleiten kann, so dass das Messer im Gebrauch längs der Stange gezogen wird, um das Sieb in diskrete Siebeinheiten (360a) zu schneiden.

23. Vorrichtung nach einem der Ansprüche 12 bis 22, die eine Steuereinheit (370) und Sensoren zum Messen der Sieblänge auf dem Tisch (362) und zum Aktivieren der Schneidvorrichtung in Reaktion darauf umfasst.

## Revendications

1. Procédé de fabrication d'une unité de tamis destinée à un ensemble de tamisage, le procédé comprenant les étapes consistant à appliquer de la colle à au moins une couche de grille et à appliquer au moins une couche supplémentaire de grille en faisant passer la, au moins une, couche et une couche supplémentaire de matériau de tamisage à travers l'emprise d'une paire de cylindres rotatifs afin de former un tamis stratifié, **caractérisé par** le fait de placer ledit tamis stratifié sur une table d'un poste de finissage et de maintenir ledit tamis stratifié tandis qu'on le coupe en unités de tamis discrètes avec un dispositif de coupe, le tamis étant fourni en continu à partir de l'emprise de la paire de cylindres rotatifs et coupé en continu.

2. Procédé selon la revendication 1, dans lequel la table comporte des ouvertures à travers lesquelles de l'air peut circuler, le procédé comprenant, de plus, l'étape consistant à refroidir le tamis passant sur elle en utilisant l'air circulant à travers lesdites ouvertures.

3. Procédé selon la revendication 1 ou 2, dans lequel un plateau se charge à partir dudit poste de stratification vers ladite table, le procédé comprenant, de plus, l'étape consistant à déplacer le tamis qui se trouve dessus.

4. Procédé selon la revendication 3, dans lequel le plateau comporte des ouvertures à travers lesquelles de l'air peut circuler, le procédé comprenant, de plus, l'étape consistant à refroidir le tamis se déplaçant sur lui en utilisant de l'air circulant à travers lesdites ouvertures.

5. Procédé selon la revendication 3 ou 4, dans lequel ledit plateau est incliné vers le bas à l'écart dudit poste de stratification et vers ladite table, le procédé comprenant l'étape consistant à déplacer le tamis le long dudit plateau incliné vers le bas vers ladite table.

6. Procédé selon l'une quelconque des revendications précédentes, comportant, de plus, le fait que la paire de cylindres comprend un cylindre supérieur et un cylindre inférieur, le procédé comprenant, de plus, l'étape consistant à refroidir le cylindre inférieur.

7. Procédé selon l'une quelconque des revendications précédentes, dans lequel l'un des cylindres de la paire de cylindres est pourvu d'un embrayage, le procédé comprenant l'étape consistant à utiliser l'embrayage pour maintenir des vitesses de rotation égales des cylindres.

8. Procédé selon l'une quelconque des revendications précédentes, dans lequel l'un des cylindres de la paire de cylindres est entraîné par un premier moteur et l'autre cylindre est entraîné par un second moteur, le procédé comprenant l'étape consistant à contrôler les vitesses relatives des cylindres afin de produire un tamis planaire relativement plat.

9. Procédé selon l'une quelconque des revendications précédentes, dans lequel la vitesse de rotation de ladite paire de cylindres est contrôlée en utilisant un contrôleur électronique.

10. Procédé selon l'une quelconque des revendications précédentes, dans lequel ledit dispositif de coupe comporte un organe de coupe agencé sur une barre qui repose essentiellement de façon transverse par rapport à la direction dudit tamis, ledit organe de coupe pouvant coulisser le long de ladite barre, le procédé comprenant, de plus, l'étape consistant à tirer l'organe de coupe le long de ladite barre afin de couper ledit tamis en unités de tamis discrètes.

11. Procédé selon l'une quelconque des revendications précédentes, comprenant un contrôleur et des capteurs servant à mesurer la longueur de tamis sur la table, le procédé comprenant, de plus, l'étape consistant à activer le dispositif de coupe en réponse au fait que la longueur mesurée atteint une valeur prédéterminée.

12. Appareil à utiliser dans la mise en oeuvre du procédé selon l'une quelconque des revendications précédentes, l'appareil comportant un poste de stratification comprenant un poste d'application de colle (310) et au moins deux cylindres rotatifs formant une emprise à travers laquelle des couches de grille sont stratifiées afin de former un tamis stratifié et un poste de finissage comprenant une table (362) et un dispositif de coupe (363) permettant de couper ledit tamis stratifié, **caractérisé en ce que** ledit poste de finissage comprend, de plus, un appareil de blocage (364, 364a) permettant de maintenir le tamis stratifié tandis que le dispositif de coupe (363) coupe ledit tamis stratifié (360) en unités de tamis discrètes (360a).

13. Appareil selon la revendication 12, dans lequel ladite table (362) comporte des ouvertures (361b) à travers lesquelles de l'air peut circuler pour faciliter le refroidissement dudit tamis.

14. Appareil selon la revendication 12 ou 13, comprenant, de plus, un plateau (361) conduisant dudit poste de stratification à ladite table (362).

15. Appareil selon la revendication 14, dans lequel ledit plateau (361) comporte des ouvertures (361b) à travers lesquelles de l'air peut circuler pour faciliter le refroidissement dudit tamis.

16. Appareil selon la revendication 14 ou 15, dans lequel ledit plateau est incliné vers le bas à l'écart dudit poste de stratification et en allant vers ladite table (362).

17. Appareil selon l'une quelconque des revendications 12 à 16, dans lequel lesdits au moins deux cylindres comprennent un cylindre supérieur (336) et un cylindre inférieur (338) agencés en vue de former une emprise à travers laquelle passe ladite couche de grille (302, 303, 305).

18. Appareil selon la revendication 17, dans laquelle un cylindre desdits cylindre supérieur (336) et cylindre inférieur (338) est pourvu d'un embrayage (336d).

19. Appareil selon la revendication 17 ou 18, dans lequel ledit cylindre supérieur (336) est entraîné par un premier moteur (336b) et ledit cylindre inférieur (338) est entraîné par un second moteur (338b).

20. Appareil selon la revendication 19, comprenant, de plus, une courroie (338a) disposée entre le cylindre inférieur (338) et ledit second moteur (338b).

21. Appareil selon l'une quelconque des revendications 17 à 20, dans lequel la vitesse de rotation desdits cylindres supérieur et inférieur (336, 338) est commandée en utilisant un contrôleur (370).

22. Appareil selon l'une quelconque des revendications 12 à 21, dans lequel ledit dispositif de coupe (363) comporte un organe de coupe agencé sur une barre (364) qui repose essentiellement de façon transverse par rapport à la direction dudit tamis, ledit organe de coupe pouvant coulisser le long de ladite barre de sorte que, en fonctionnement, ledit organe de coupe est tiré le long de ladite barre pour couper ledit tamis en unités discrètes de tamis (360a).

23. Appareil selon l'une quelconque des revendications 12 à 22, comportant un contrôleur (370) et des capteurs permettant de mesurer la longueur de tamis sur la table (362) et d'activer le dispositif de coupe en réponse à ces capteurs.
